# EUROPEAN PATENT SPECIFICATION

(11) **EP 3 088 761 B1**
(45) Date of publication and mention of the grant of the patent: **15.01.2020**
(21) Application number: 15165585.9
(22) Date of filing: 29.04.2015
(51) Int. Cl.: F16D 28/00, F16D 121/24, F16D 125/20

(54) **ELECTROMECHANICAL POWER ACTUATOR, FRICTION GENERATION SYSTEM FOR A MOTOR VEHICLE, AND METHOD OF ACTUATING A FRICTION GENERATION DEVICE FOR A MOTOR VEHICLE**
ELEKTROMECHANISCHER LEISTUNGSAKTUATOR, REIBUNGSERZEUGUNGSSYSTEM FÜR EIN KRAFTFAHRZEUG UND VERFAHREN ZUR BETÄTIGUNG EINER REIBUNGSERZEUGUNGSVORRICHTUNG FÜR EIN KRAFTFAHRZEUG
ACTIONNEUR ÉLECTROMÉCANIQUE, SYSTÈME DE GÉNÉRATION DE FRICTION POUR UN VÉHICULE AUTOMOBILE ET PROCÉDÉ D'ACTIONNEMENT D'UN DISPOSITIF DE GÉNÉRATION DE FRICTION POUR UN VÉHICULE AUTOMOBILE

(43) Date of publication of application: 02.11.2016
(73) Proprietor: KNORR-BREMSE Systeme für Nutzfahrzeuge GmbH, 80809 München (DE)
(72) Inventor: Balogh, Levente, 2310 Szigetszentmiklos (HU); Németh, Huba, 1116 Budapest (HU)

(56) References cited:
- FR-A- 889 195
- US-A- 2 579 266
- US-A1- 2006 032 713

## Description

The present invention relates to an electromechanical power actuator, to a friction generation system for a motor vehicle, and to a method of actuating a friction generation device for a motor vehicle.

For vehicle systems, pneumatic and hydraulic actuators may usually be employed rather than electromechanical actuation methods in cases where working against high forces and complying with defined actuating paths are required.

DE 100 33 649 A1 discloses a drive for producing relative movement between two circumferentially rotatable components in vehicle clutch system with engagement means fixed relative to first component and engaging between two adjoining windings of wound spring.

US 2 579 266 A discloses a device for producing an actuating impulse such as required for lifting brakes, for releasing clutches etc., wherein the device is of the centrifugal actuator type.

FR 889 195 A discloses improvements of the control of centrifugal and analog servo brakes.

US 2006/0032713 A discloses an electric device for operating vehicle brakes using a pulling element and an operating motor with a rotatable driving axis, wherein the device includes a centrifugal assembly.

It is the object of the present invention to provide an improved electromechanical power actuator, an improved friction generation system for a motor vehicle, and an improved method of actuating a friction generation device for a motor vehicle.

This object is achieved by an electromechanical power actuator, by a friction generation system for a motor vehicle, and by a method of actuating a friction generation device for a motor vehicle according to the main claims.

The present invention is based on the finding that an electromechanical power actuator may be operated by centrifugal masses, in particular, so that high speed and relatively low force of an electric motor may be converted to low-speed, high-force actuation in one step, using a coupling and eliminating both torque transfer and any further integrated gear elements. The present invention may provide, for example, a balanced axial actuation device without transfer gear, which may enable applying an electromotor-operated centrifugal mass actuation principle for operation of friction generation vehicle systems, e.g. clutch or brake, in an efficient way.

The present invention may introduce a principle which has the property to convert high-speed rotation to linear movement in one step. This principle is the centrifugal mass principle, wherein an actuation force is transferred from a centrifugal force appearing on rotated masses. To deal with axial operation of control elements, defined transfer of the centrifugal force to axial or actuation force may be achieved despite high-speed rotation of the masses, without this rotation appearing on the output of the actuator, which may be acting on a stationary element. Using the present invention, sufficient force load may be generated on a contacted element, wherein wear can be reduced because the rotational movement originating from the centrifugal masses is not forwarded to the actuated element.

Advantageously, the application of an electromechanical actuation principle in vehicle systems can be achieved, with electrical power to mechanical power being transformable using a simple space-saving mechanism. Pneumatic and hydraulic actuators may be substituted with electromechanical actuators, because an electromechanical actuator according to embodiments of the present invention may work against high forces and over a defined actuating path with speed which is relatively low as compared with the dynamics of mechatronic actuators. In particular, the present invention may provide improvements of the electromechanical actuation in order to reduce or eliminate the need for torque or force transmissions which transfer the high-speed and low-force property of electromagnetic machines to be able to operate with high force and reduced dynamics or speed. Thus, a linear actuator may be provided for vehicle systems, for example, to move mechanical elements against a load of elastic elements. The forces required to be applied for such a kind of operation may be provided by the electromechanical actuator according to embodiments of the present invention, even though the actuated systems devices may rather be designed for hydraulic of pneumatic operation due to historical reasons, for example. Hence, it becomes possible to replace such conventional actuators by electromechanical operation, wherein the power of high-speed and low-force electromagnetic rotor of the electromechanical actuator according to embodiments of the present invention maybe transferred to high-force axial or linear movement, without using gear elements. The present invention may provide a reduction in structural complexity, eliminating multiple points where a failure might otherwise have occurred, and may increase efficiency.

The present invention provides an electromechanical power actuator, the actuator being configured to apply an actuation force along a linear actuation axis to a friction generation device for a motor vehicle, characterized in that the actuator comprises:
a primary electromagnetic coil formed to be arranged in at least one winding around the actuation axis or around an axis parallel or transversal thereto;
a rotor magnetically connected to the primary electromagnetic coil, the rotor having a plurality of mass elements rotatable with the rotor and radially movable with respect to a rotation axis of the rotor and in relation to rotation speed of the rotor;
an acting element formed to be guided along the actuation axis and coupled to the rotor;
a coupling formed to connect the acting element to the mass elements, wherein the acting element is axially movable in relation to radial movement of the mass elements, wherein the coupling comprises an axial bearing for inhibiting torque transfer from the rotor to the acting element; and
an energy storage device, wherein the energy storage device is integrated into the actuator, wherein the energy storage device comprises a rotatable flywheel.

The rotation axis of the rotor may be the actuation axis or an axis substantially parallel with respect to the actuation axis. The coupling may be operated between a coupling state and a decoupling state.

According to one embodiment, the actuator may comprise an electronic control unit connected to the primary electromagnetic coil. The electronic control unit may be configured to apply an electrical signal to the primary electromagnetic coil. It is an advantage of this embodiment that an actuation part of the actuator may be controlled accurately and reliably.

In particular, the electronic control unit may be integrated into a housing of the actuator. It is an advantage of this embodiment that the actuator can be provided with reduced volume, size and/or footprint.

According to another embodiment, the mass elements may be mounted on the rotor. Here, the mass elements may be mounted directly on the rotor. Additionally or alternatively the mass elements may be mounted on an additional axle and connected to the rotor through gear elements. It is an advantage of this embodiment that the actuator design or layout can be adapted to specific requirements of an intended application.

According to a further embodiment, a connection of the mass elements and the coupling may be provided by pivoted levers. Additionally or alternatively the connection of the mass elements and the coupling may be provided by a flexible cord or chain element. It is an advantage of this embodiment that the mechanical linkage also can be adapted to specific requirements of an intended application and can be effected in secure and reliable manner.

According to one embodiment, the primary electromagnetic coil and the rotor may be spaced from each other radially and additionally or alternatively axially with respect to the actuation axis. In other words, a direction of magnetic flux of a magnetic connection between the primary electromagnetic coil and the rotor may extend along the actuation axis or transverse to the actuation axis. It is an advantage of this embodiment that constructive layout or design of the actuator can be made flexible and adjusted to requirements as necessary.

According to yet another embodiment, radial movement of the mass elements away from the rotation axis of the rotor may produce axial movement of the acting element along the actuation axis away from the rotor. Alternatively, radial movement of the mass elements away from the rotation axis of the rotor may produce axial movement of the acting element along the actuation axis toward the rotor. It is an advantage of this embodiment that a direction of the actuation stroke travel can be adjusted simply by way of the constructive layout of the actuator. Thus, outward or inward actuation can be achieved with the same reliable basic construction.

According to a further embodiment, the actuator may comprise a wear compensating device for compensating wear of the friction generation device. The wear compensating device may be arranged between the rotor and the coupling and additionally or alternatively between the coupling and the acting element. Thus, the actuator may optionally comprise at least one wear compensating device. It is an advantage of this embodiment that wear and fatigue can be reduced in the actuator and particularly in the friction generation device.

According to the invention, the actuator comprises an energy storage device integrated into the actuator, with the advantage that autonomous, partially autonomous and/or energy-efficient operation of the actuator can be achieved.

In particular, the energy storage device may comprise at least one electrostatic capacitor element and additionally or alternatively at least one electrochemical battery element. It is an advantage of this embodiment that energy storage can be realised using readily-available, simple and well-known components.

Furthermore, according to the invention, the energy storage device comprises a rotatable flywheel, with the advantage that energy efficiency of the actuator can be enhanced and/or energy recuperation can be achieved.

Moreover, the flywheel may be connected to the rotor by a mechanical coupling device. In particular, the mechanical coupling device may be operated between a coupling state and a decoupling state depending on a control signal from an electronic control unit. The mechanical coupling device may be an operable mechanical coupling. It is an advantage of this embodiment that operation of the flywheel can be controlled reliably and also in line with momentary energy requirements.

Additionally or alternatively, the flywheel may be an additional rotor magnetically connected to a secondary coil arranged in at least one winding around the actuation axis or around an axis parallel or transversal thereto. The secondary coil may be similar or identical with the primary coil. The secondary colours may be connected to an electronic control unit. It is an advantage of this embodiment that operation and use of the flywheel can be made independent of actuating operation by the primary coil and rotor.

According to yet another embodiment, the plurality of mass elements may comprise three mass elements, for example.

The present invention also provides a friction generation system for a motor vehicle, characterized in that the friction generation system comprises:
an aforementioned electromechanical power actuator; and
a friction generation device, which is arranged to be actuated by the actuator so as to cause friction.

The friction generation device may be a clutch of a vehicle engine, a brake of the vehicle wheels or the like. The aforementioned electromechanical power actuator may be used advantageously in conjunction with the friction generation system to actuate the friction generation device.

The present invention further provides a method of actuating a friction generation device for a motor vehicle, wherein the method is executable using an electromechanical power actuator, the actuator being configured to apply an actuation force along a linear actuation axis to the friction generation device, characterized in that the method comprises:
applying an electrical signal to a primary electromagnetic coil of the actuator formed to be arranged in at least one winding around the actuation axis or around an axis parallel or transversal thereto, so as to rotate a rotor magnetically connected to the primary electromagnetic coil, the rotor having a plurality of mass elements rotatable with the rotor and radially movable with respect to a rotation axis of the rotor and in relation to rotation speed of the rotor; and
transferring kinetic energy from the mass elements to an acting element formed to be guided along the actuation axis and coupled to the rotor by means of a coupling formed to connect the acting element to the mass elements, so as to move the acting element along the actuation axis, wherein the acting element is axially movable in relation to radial movement of the mass elements, wherein the coupling comprises an axial bearing for inhibiting torque transfer from the rotor to the acting element.

The method may be executed or carried out advantageously in conjunction with or using the aforementioned electromechanical power actuator and/or the aforementioned friction generation system.

Preferred embodiments of the present invention will be explained in greater detail in the following with reference to the drawings, in which:
- Fig. 1: shows a schematic view of a motor vehicle with a friction generation system according to an embodiment of the present invention;
- Fig. 2: shows a flowchart of a method according to an embodiment of the present invention;
- Fig. 3: shows a cross-sectional view of an electromechanical power actuator according to an embodiment of the present invention;
- Fig. 4: shows a cross-sectional view of an electromechanical power actuator according to an embodiment of the present invention;
- Fig. 5: shows a cross-sectional view of an electromechanical power actuator according to an embodiment of the present invention;
- Fig. 6: shows a cross-sectional view of an electromechanical power actuator according to an embodiment of the present invention;
- Fig. 7: shows a front view of the electromechanical power actuator shown in Fig. 6;
- Fig. 8: shows a cross-sectional view of an electromechanical power actuator according to an embodiment of the present invention;
- Fig. 9: shows a cross-sectional view of an electromechanical power actuator according to an embodiment of the present invention;
- Fig. 10: shows a cross-sectional view of an electromechanical power actuator according to an embodiment of the present invention;
- Fig. 11: shows a cross-sectional view of an electromechanical power actuator according to an embodiment of the present invention;
- Fig. 12: shows a cross-sectional view of an electromechanical power actuator according to an embodiment of the present invention;
- Fig. 13: shows a cross-sectional view of an electromechanical power actuator according to an embodiment of the present invention;
- Fig. 14: shows a cross-sectional view of an electromechanical power actuator according to an embodiment of the present invention;
- Fig. 15: shows a cross-sectional view of an electromechanical power actuator according to an embodiment of the present invention; and
- Fig. 16: shows a cross-sectional view of an electromechanical power actuator according to an embodiment of the present invention.

Throughout the following description of the preferred embodiments of the present invention, the same or similar reference numerals may be used for similar or similarly acting elements shown in the various figures, with repeated description of such elements being omitted.

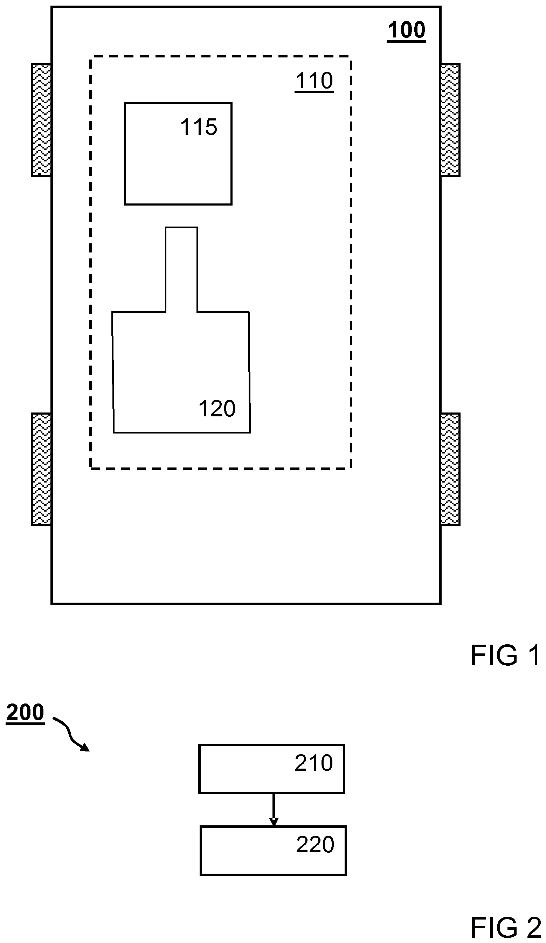

Fig. 1 shows a schematic view of a motor vehicle 100 with a friction generation system 110 according to an embodiment of the present invention. The friction generation system 110 comprises a clutch or break system of the motor vehicle 100, for example.

The friction generation system 110 comprises a friction generation device 115 and an electromechanical power actuator 120. The friction generation device 115 is arranged so as to be actuated by the actuator 120. The friction generation device 115 is configured to cause friction upon or in response to actuation by the actuator 120.

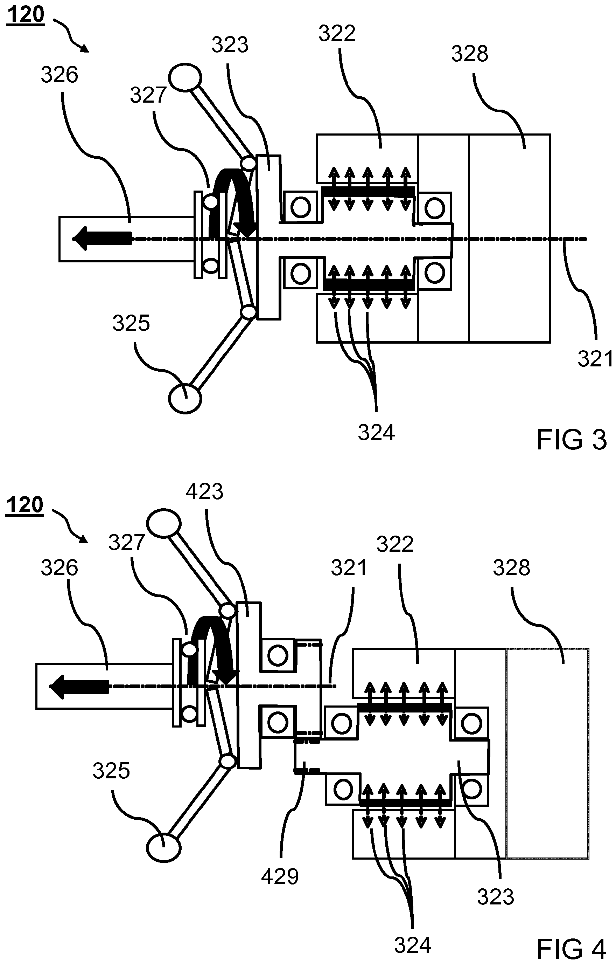

The actuator 120 is configured to apply an actuation force along a linear actuation axis to the friction generation device 115. The actuator 120 shall be described in greater detail in the following with reference to Figures 3 to 16.

Fig. 2 shows a flowchart of a method 200 of actuating according to an embodiment of the present invention. The method 200 can be carried out to actuate a friction generation device for a motor vehicle. The method 200 is executable using an electromechanical power actuator, the actuator being configured to apply an actuation force along a linear actuation axis to the friction generation device. In particular, the method 200 can be carried out using the actuator shown in Fig. 1 and/or at least one of Figures 3 to 16 or using a similar actuator.

The method 200 comprises a step 210 of applying an electrical signal to a primary electromagnetic coil of the actuator formed to be arranged in at least one winding around the actuation axis or around an axis parallel or transversal thereto, so as to rotate a rotor magnetically connected to the primary electromagnetic coil. The rotor has a plurality of mass elements rotatable with the rotor and radially movable with respect to a rotation axis of the rotor and in relation to rotation speed of the rotor.

Furthermore, the method 200 comprises a step 220 of transferring kinetic energy from the mass elements to an acting element formed to be guided along the actuation axis and coupled to the rotor by means of a coupling formed to connect the acting element to the mass elements, so as to move the acting element along the actuation axis. The acting element is axially movable in relation to radial movement of the mass elements. The coupling comprises an axial bearing for inhibiting torque transfer from the rotor to the acting element.

Fig. 3 shows a cross-sectional view of an electromechanical power actuator 120 according to an embodiment of the present invention. The actuator 120 is the actuator shown in Fig. 1 and/or the actuator used in Fig. 2 or a similar actuator. The actuator 120 is configured to apply an actuation force along a linear actuation axis 321 to a friction generation device for a motor vehicle. The actuation force along the linear actuation axis 321 is schematically or symbolically illustrated by a straight arrow in Fig. 3.

The actuator 120 comprises a primary electromagnetic coil 322 formed to be arranged in at least one winding around the actuation axis 321. Furthermore, the actuator 120 comprises a rotor 323 which is rotatable about the actuation axis 321. Rotation of the rotor 323 is illustrated by a curved arrow in Fig. 3. The rotor 323 is magnetically connected to the primary electromagnetic coil 322. Magnetic field lines 324 of a magnetic connection between the primary electromagnetic coil 322 and the rotor 323 are depicted in Fig. 3 for illustration purposes. The primary electromagnetic coil 322 and the rotor 323 are spaced from each other radially with respect to the actuation axis 321, with the rotor 323 being surrounded by the primary electromagnetic coil 322. The primary electromagnetic coil 322 is configured to set the rotor 323 to rotation magnetically about the actuation axis 321. The magnetic field lines 324 depicted in Fig. 3 are directed transversally or perpendicular relative to the actuation axis 321.

The rotor 323 comprises a plurality of mass elements 325, wherein two are shown in the sectional view of Fig. 3. For example, the actuator 120 may comprise two, three or more mass elements 325. The mass elements 325 are mounted to the rotor 323 so as to be rotatable with the rotor 323. Furthermore, the mass elements 325 are mounted to the rotor 323 so as to be radially movable with respect to the actuation axis 321 by centrifugal force upon the rotation of the rotor 323. The radial movement of the mass elements 325 with respect to the actuation axis 321 and/or with respect to the rotor 323 or so is in relation to rotation speed of the rotor 323. In particular, the mass elements 325 are mounted to the rotor 323 by means of pivoted levers.

The actuator 120 further comprises an acting element 326 formed to be moved and/or guided along the actuation axis 321. The acting element 326 is configured to abut or engage with the friction generation device to apply the actuation force thereto along the actuation axis 321. The acting element 326 is coupled, connected or linked to the rotor 323 via a coupling 327 and the mass elements 325.

The coupling 327 is arranged between the acting element 326 and the mass elements 325. The coupling 327 is formed to connect the acting element 326 to the mass elements 325. By means of the coupling 327 the acting element 326 and the mass elements 325 are coupled so that the acting element 326 is axially movable in relation or in proportion to radial movement of the mass elements 325. In particular, the coupling 327 is or comprises an axial bearing for inhibiting torque transfer from the rotor 323 or mass elements 325 to the acting element 326. Hence, the coupling 327 is formed to transfer axial force along the actuation axis 321 from the mass elements 325, in particular their pivoted levers, to the acting element 326.

On a first axial side, the coupling 327 is mounted to the acting element 326. On a second axial side opposite to the first side, the pivoted levers carrying the mass elements 325 are arranged to abut or engage with the coupling 327. The coupling 327 is axially from the rotor 323 along the actuation axis 321. Radial movement of the mass elements 325 away from the actuation axis 321 produces axial movement of the acting element 326 along the actuation axis 321 away from the rotor 323.

The actuator 120 further comprises an electronic control unit 328. The electronic control unit 328 is electrically connected to the primary electromagnetic coil 322. The electronic control unit 328 is arranged adjacent to the primary electromagnetic coil 322 and the rotor 323. Along the actuation axis 321, the primary electromagnetic coil 322 and the rotor 323 are arranged between the coupling and the mass elements 325 on one side and the electronic control unit 328 on the other side.

According to another embodiment, the electronic control unit 328 may be integrated into a housing of the actuator 120.

In other words, Fig. 3 shows an electromechanical power actuator 120, wherein the mass elements 325 or centrifugal masses are rotated by the rotor 323 or electric motor rotor, which is in magnetic connection to the primary electromagnetic coil 322 or electric motor coil. The primary electromagnetic coil 322 is powered electronically by the electronic control unit 328. The coupling 327 is arranged between the mass elements 325 or centrifugal masses and the acting element 326, locking of the acting element 326, which is the output of the actuator 120, against rotation or torque transferred from the rotor 323. In this way, the rotation or torque is not transferred further, thus eliminating any further friction and wear generation out of the coupling 327 inside of the actuator 120.

Fig. 4 shows a cross-sectional view of an electromechanical power actuator 120 according to an embodiment of the present invention. The actuator 120 shown in Fig. 4 corresponds to the actuator shown in Fig. 3 with the exception that the rotor 323 further comprises an additional axle 423 linked to the rotor 323 via a gear connection 429 or gear elements, wherein the mass elements 325 are mounted on the additional axle 423. The additional axle 423 is rotatable about the actuation axis 321, while the rotor 323 is rotatable about the rotation axis which is, within fabrication tolerances, parallel and offset with respect to the actuation axis 321. Hence, the primary electromagnetic coil 322 is formed to be arranged in at least one winding around the rotation axis of the rotor 323, which is an axis parallel to the actuation axis 321.

In other words, Fig. 4 shows an alternative setting of the actuator 120, wherein the mass elements 325 are mounted indirectly on the rotor 323. The additional axle 423 is provided for mounting the mass elements 325, which then may be rotated via gear connection 429 to the rotor 323. In this way, rotational speed of the mass elements 325 can be further increased, wherein a lower mass of the mass elements 325 may be sufficient for maintaining the same actuation force as compared to Fig. 3, for example.

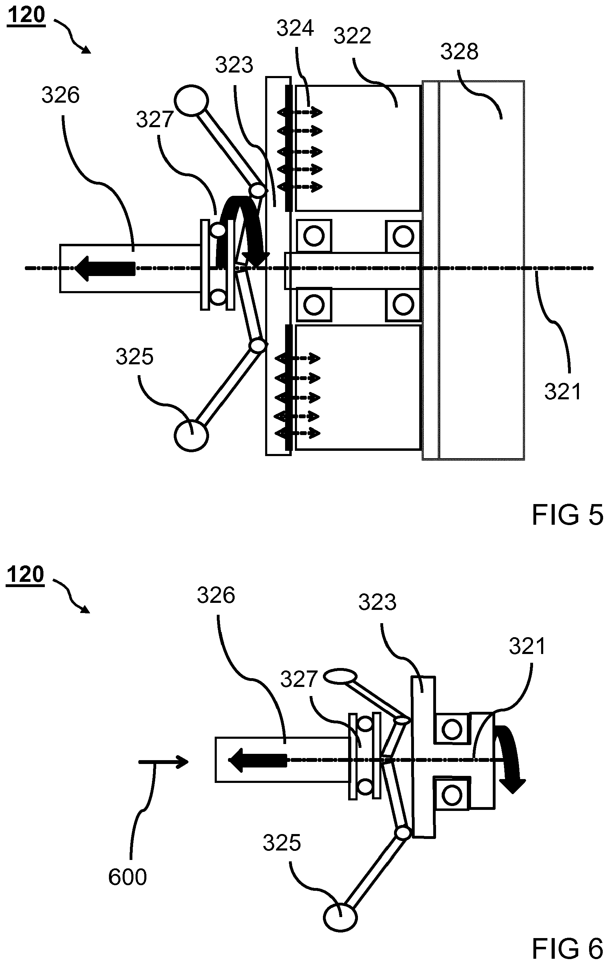

Fig. 5 shows a cross-sectional view of an electromechanical power actuator 120 according to an embodiment of the present invention. The actuator 120 shown in Fig. 5 corresponds to the actuator shown in Fig. 3 with the exception that the primary electromagnetic coil 322 and the rotor 323 are spaced from each other axially with respect to the actuation axis 321, wherein the magnetic field lines 324 are directed along the actuation axis 321.

In other words, Fig. 3 shows an embodiment in which the magnetic connection of the rotor 323 and the primary electromagnetic coil 322 is along or parallel to the actuation axis 321. In this way, advantage of lower inertia of the rotor 323 can be gained, and/or a number of windings of the primary electromagnetic coil 322 and/or a number of magnetically connected disc surfaces of the rotor 323 can be increased along the actuation axis 321.

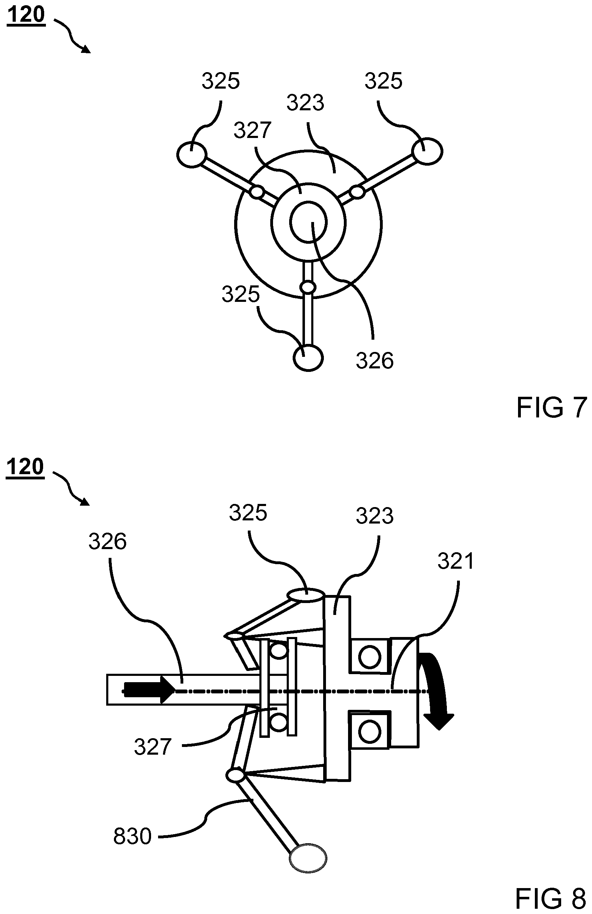

Fig. 6 shows a cross-sectional view of an electromechanical power actuator 120 according to an embodiment of the present invention. The actuator 120 shown in Fig. 6 corresponds to any of the actuators shown in one of Figures 3 to 5 with the exception that it is implied that they actuator 120 comprises three mass elements 325, wherein only the actuation axis 321, the rotor 323, the mass elements 325, the acting element 326 and the coupling 327 are shown in the illustration in Fig. 6. What is also shown in Fig. 6 is a viewing direction 600 for a front view of the actuator 120 as depicted in Fig. 7. The viewing direction 600 is toward the acting element 326 along the actuation axis 321 in the opposite direction of the actuation force.

Fig. 7 shows a front view of the electromechanical power actuator 120 shown in Fig. 6. In the front view, the rotor 323, the three mass elements 325, the acting element 326 and the coupling 327 are shown. In other words, Fig. 7 shows that by placing three mass elements 325 around the actuation axis a load balance of the coupling 327 or bearing can be improved.

Fig. 8 shows a cross-sectional view of an electromechanical power actuator 120 according to an embodiment of the present invention. The actuator 120 shown in Fig. 8 corresponds to any of the actuators shown in one of Figures 3 to 7 with the exception that the mass elements 325 are mounted on the rotor 323 so that radial movement of the mass elements 325 away from the actuation axis 321 produces axial movement of the acting element 326 along the actuation axis 321 toward the rotor 323, wherein only the actuation axis 321, the rotor 323, the mass elements 325, the acting element 326, the coupling 327 and lever arms 830 are shown in the illustration in Fig. 8. In particular, the actuator 120 shown in Fig. 8 corresponds to the actuator shown in Fig. 6 with the exception that the lever arms 830 are mounted to the rotor 323 so as to be pivoted in the opposite rotational direction with respect to Fig. 6.

The centrifugal motion of the mass elements 325 is transferred to the acting element 326 through the coupling 327 by the lever arms 830 pivoted on the rotor 323. Each mass element 325 is mounted to the rotor 323 by means of a lever arm 830. Each lever arm 830 is pivoted on the rotor 323 and has a mass element 325 mounted to one end, wherein the other end of the lever arm 830 is arranged to abut on the coupling 327. Each lever arm 830 is formed to be angled, with the fulcrum being a angular point. In other words, Fig. 8 shows a further possible realisation of the actuator 120, wherein the actuation force direction along the actuation axis 321 in response to rotational movement of the mass elements 325 is opposite with respect to the actuation force direction of any of the actuators shown in one of Figures 3 to 7. Thus, a pulling actuation is made possible, e.g. for operating a to pull-type clutch or the like.

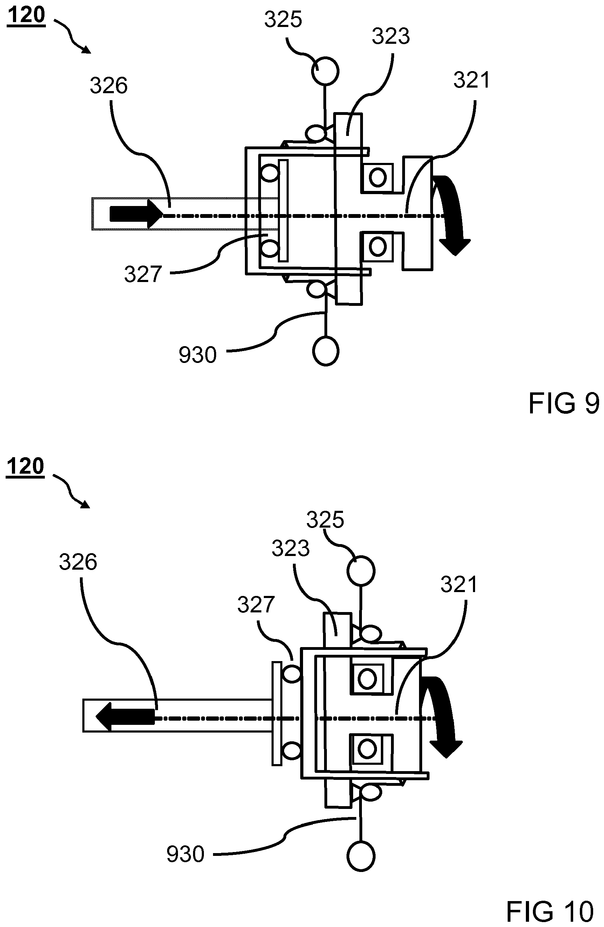

Fig. 9 shows a cross-sectional view of an electromechanical power actuator 120 according to an embodiment of the present invention. The actuator 120 shown in Fig. 9 corresponds to the actuator shown in Fig. 8 with the exception that the mass elements 325 are connected to the coupling 327 and to the rotor 323 by attachments 930, and wherein the coupling 327 is shaped differently. Each attachment 930 comprises a flexible cord or chain element for connecting one of the mass elements to the coupling 327. Furthermore, each attachment 930 comprises a pulley mounted to the rotor 323 and formed to interact with the flexible cord or chain element.

Fig. 10 shows a cross-sectional view of an electromechanical power actuator 120 according to an embodiment of the present invention. The actuator 120 shown in Fig. 10 corresponds to the actuator shown in Fig. 9 with the exception that the mass elements 325 are mounted by means of the attachments 930 so that radial movement of the mass elements 325 away from the actuation axis 321 produces axial movement of the acting element 326 along the actuation axis 321 away from the rotor 323. In other words, the actuation force direction of the actuator 120 shown in Fig. 10 corresponds to the actuation force direction after any of the actuators shown in one of Figures 3 to 7.

Figures 9 and 10 show that the centrifugal motion of the mass elements three and 25 is also transferable by elastic cord-type or chain-type elements between the mass elements 325 and killing 327 both for push and pull actuation of the acting element 326, for example.

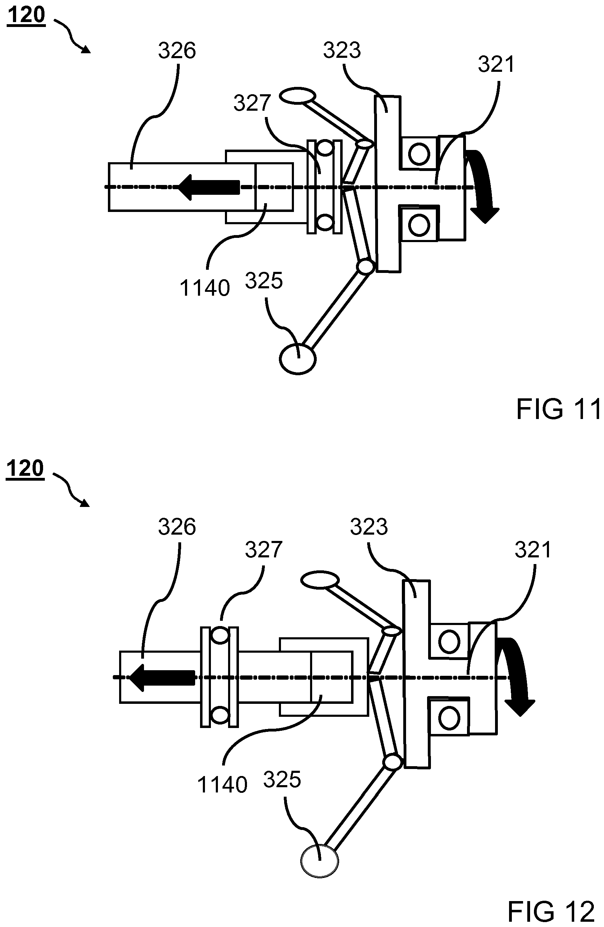

Fig. 11 shows a cross-sectional view of an electromechanical power actuator 120 according to an embodiment of the present invention. The actuator 120 shown in Fig. 11 corresponds to the actuator shown in Fig. 6 with the exception that the actuator 120 further comprises a wear compensating device 1140 arranged between the coupling 327 and the acting element 326. Furthermore, the actuator 120 shown in Fig. 11 is similar to any of the actuators shown in one of Figures 3 to 7, with the wear compensating device 1140 being employable in any of the actuators shown in one of Figures 3 to 10 and 13 to 16. The wear compensating device 1140 is formed as a buffer between the coupling 327 and the acting element 326. In particular, the wear compensating device 1140 comprises a sleeve in which part of the acting element 326 is slidably accommodated.

Fig. 12 shows a cross-sectional view of an electromechanical power actuator 120 according to an embodiment of the present invention. The actuator 120 shown in Fig. 12 corresponds to the actuator shown in Fig. 11 with the exception that the wear compensating device 1140 is arranged between the rotor 323 and the coupling 327. Herein, the wear compensating device 1140 comprises a sleeve in which part of the coupling 327 is slidably accommodated and against which the free ends of the lever arms are arranged in abutment.

Thus, Figures 11 and 12 show actuator embodiments in which the wear compensating device 1140 in inserted between acting element 326 and the coupling 327, as shown in Fig. 11, or between the coupling 327 and the mass elements 325, as shown in Fig. 12. In this way, an actuation stroke of the acting element 326 is restricted to an operation stroke of the operated friction generation device and it is not necessary to cover the additional stoke which appears due to wear of a friction component of the operated friction generation device. Thus, geometry of a transfer mechanism between the mass elements 325 and coupling 327 can be further optimized making use of the fact that an initial radius or distance of the mass elements 325 with respect to the actuation axis 321 is constant, and that mostly the same radius range occurs during operation.

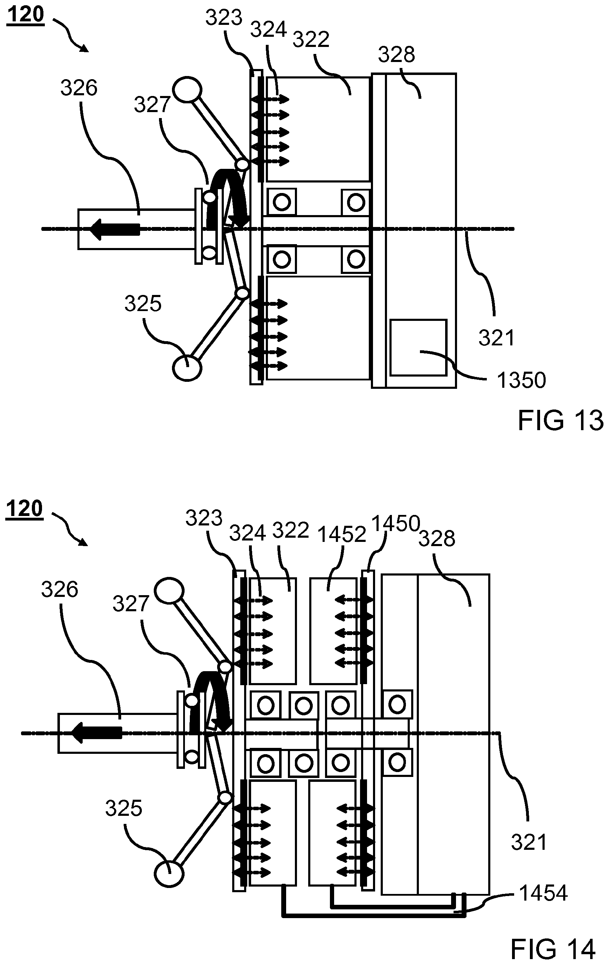

Fig. 13 shows a cross-sectional view of an electromechanical power actuator 120 according to an embodiment of the present invention. The actuator 120 shown in Fig. 13 corresponds to the actuator shown in Fig. 5 with the exception that the actuator 120 further comprises an energy storage device 1350. Furthermore, the energy storage device 1350 is employable in any of the actuators shown in one of Figures 3 to 12 and 14 to 16. The energy storage device 1350 is integrated into the actuator 120, more precisely into the electronic control unit 328, for example. In particular, the energy storage device 1350 comprises at least one electrostatic capacitor element and/or at least one electrochemical battery element.

In other words, Fig. 13 shows an embodiment in which an energy storage device 1350 is integrated in the actuator 120. Such an integrated electrical energy storage can be based on electro-static or electro-chemical principles. The electro-static principle is usually realised by a plurality of capacitors, wherein the electro-chemical principle is usually realised by batteries.

Fig. 14 shows a cross-sectional view of an electromechanical power actuator 120 according to an embodiment of the present invention. The actuator 120 shown in Fig. 14 corresponds to the actuator shown in Fig. 13 with the exception that the energy storage device is realised differently. In the actuator 120 as shown in Fig. 14, the energy storage device comprises a rotatable flywheel 1450. Furthermore, the energy storage device of the actuator 120 comprises a secondary electromagnetic coil 1452 and wiring 1454. The flywheel 1450 is an additional rotor magnetically connected to the secondary coil 1452.

The secondary coil 1452 is arranged in at least one winding around the actuation axis 321.

The energy storage device is arranged between the primary electromagnetic coil 322 and the electronic control unit 328 along the actuation axis 321. In particular, the flywheel 1450 is arranged between the secondary electromagnetic coil 1452 and the electronic control unit 328 along the actuation axis 321. The wiring 1454 is arranged to establish an electrically conductive connection between the electronic control unit 328 and the primary and secondary electromagnetic coils 322 and 1452.

In other words, Fig. 9 shows an embodiment in which an alternative energy storage is used, wherein the flywheel 1450 is configured to store energy in its rotational movement. Using an additional electric motor or machine, its rotor can be formed as the flywheel 1450, which can be speeded up by low dynamics, resulting low power consumption. The accumulated kinetic energy can be used for fast actuation of the actuator 120, generating high current through the additional electric machine by braking the flywheel 1450. In this way, the high current is only transferred within the actuator 120 and does not load external wires. After actuation, the kinetic energy of the mass elements 325 may be recuperated, generating high current which may provided to the secondary electromagnetic coil 1452 to speed up the flywheel 1450. Control of the current flow may be provided by the electronic control unit 328 to which both coils 322 and 1452 are connected by means of the wiring 1454.

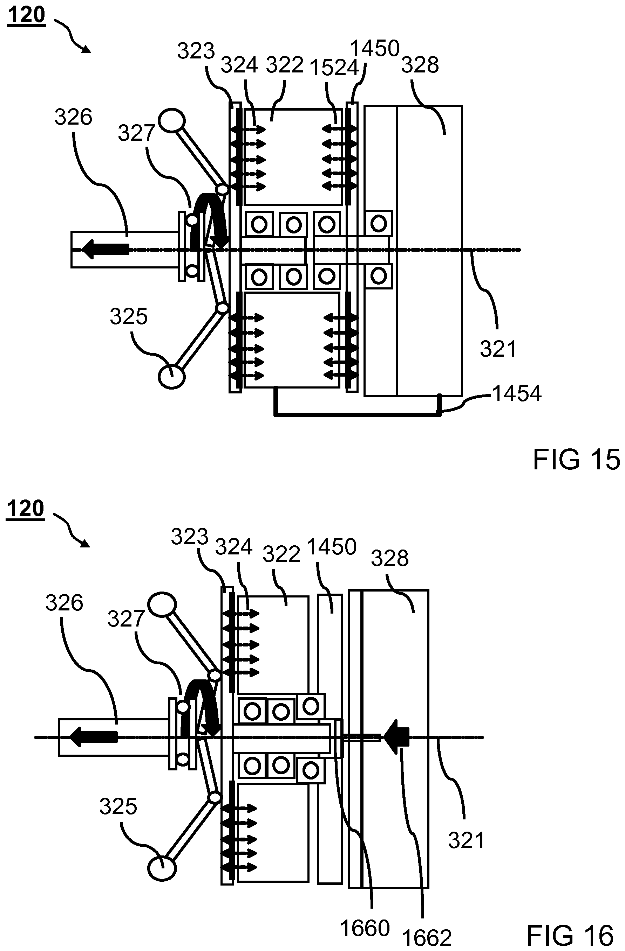

Fig. 15 shows a cross-sectional view of an electromechanical power actuator 120 according to an embodiment of the present invention. The actuator 120 shown in Fig. 15 corresponds to the actuator shown in Fig. 14 with the exception that the flywheel 1450 is an additional rotor magnetically connected to the primary coil 322. Further magnetic field lines 1524 are shown to illustrate the magnetic connection between the primary coil 322 and the flywheel 1450. Herein, the flywheel 1450 is arranged between the primary coil 322 and the electronic control unit 328. Thus, the primary coil 322 is sandwiched between the rotor 323 and the flywheel 1450 along the actuation axis 321.

In other words, in the actuator 120 as shown in Fig. 15, the primary coil 322, the rotor 323 and the flywheel 1450 can be designed so as to eliminate the an additional or secondary coil and use the primary coil 322 to operate or rotate both the rotor 323 and the flywheel 1450.

Fig. 16 shows a cross-sectional view of an electromechanical power actuator 120 according to an embodiment of the present invention. The actuator 120 shown in Fig. 16 corresponds to the actuator shown in Fig. 13 with the exception that the energy storage device is realised differently. In the actuator 120 as shown in Fig. 16, the energy storage device comprises a rotatable flywheel 1450 connected to the rotor 323 by means of a mechanical coupling device 1660. The flywheel 1450 is arranged between the primary coil 322 and the electronic control unit 328 along the actuation axis 321.

The mechanical coupling device 1660 is operable between a connected or coupling state and a disconnected or decoupling state by the electronic control unit 328. In particular, the mechanical coupling device 1660 may be set to the coupling state or decoupling state depending on a control signal from the electronic control unit 328. In the coupling state, the flywheel 1450 is mechanically coupled to the rotor 323. In the decoupling state, the flywheel 1450 is mechanically decoupled from the rotor 323.

In other words, Fig. 16 shows that kinetic energy from the rotor 323 may be transferred or stored to the flywheel 1450 by way of a mechanical connection via the mechanical coupling device 1660.

In case of high power need, it may not always be possible to get such power from a vehicle electric network directly due to limitations of wires to and from a battery of the vehicle. With reference to Figures 13 to 16 such a situation can be avoided or bypassed. Since the mass elements 325 store kinetic energy during actuation, such energy can be recuperated if energy storage is provided in the actuator 120, without loading an external wire connection by high charging current. Such energy storage also is convenient for power supply for an upcoming actuation, also reducing current load of external wires. Moreover, such energy storage can be charged also from external wires in advance to actuation by limited current load on the external wires using the potential length of a time window before actuation.

The embodiments described are chosen as mere examples and may be combined in any way as expedient.

### List of reference numerals

- 100: motor vehicle
- 110: friction generation system
- 115: friction generation device
- 120: electromechanical power actuator
- 200: method of actuating
- 210: step of applying
- 220: step of transferring
- 321: linear actuation axis
- 322: primary electromagnetic coil
- 323: rotor
- 324: magnetic field lines
- 325: mass elements
- 326: acting element
- 327: coupling
- 328: electronic control unit
- 423: additional axle
- 429: gear connection
- 600: viewing direction
- 830: lever arm
- 930: attachment
- 1140: wear compensating device
- 1350: energy storage device
- 1450: flywheel
- 1452: secondary electromagnetic coil
- 1454: wiring
- 1524: further magnetic field lines
- 1660: mechanical coupling device
- 1662: coupling direction

## Claims

1. Electromechanical power actuator (120), the actuator (120) being configured to apply an actuation force along a linear actuation axis (321) to a friction generation device (115) for a motor vehicle (100), **characterized in that** the actuator (120) comprises:
a primary electromagnetic coil (322) formed to be arranged in at least one winding around the actuation axis (321) or around an axis parallel or transversal thereto;
a rotor (323; 423) magnetically connected to the primary electromagnetic coil (322), the rotor (323; 423) having a plurality of mass elements (325) rotatable with the rotor and radially movable with respect to a rotation axis of the rotor (323; 423) and in relation to rotation speed of the rotor (323; 423);
an acting element (326) formed to be guided along the actuation axis (321) and coupled to the rotor (323; 423);
a coupling (327) formed to connect the acting element (326) to the mass elements (325), wherein the acting element (326) is axially movable in relation to radial movement of the mass elements (325), wherein the coupling (327) comprises an axial bearing for inhibiting torque transfer from the rotor (323; 423) to the acting element (326); and
an energy storage device (1350; 1450), **characterized in that** the energy storage device (1350; 1450) is integrated into the actuator (120), and **in that** the energy storage device comprises a rotatable flywheel (1450).

2. Electromechanical power actuator (120) according to claim 1, **characterized by** an electronic control unit (328) connected to the primary electromagnetic coil (322).

3. Electromechanical power actuator (120) according to claim 2 **characterized in that** the electronic control unit (328) is integrated into a housing of the actuator (120).

4. Electromechanical power actuator (120) according to one of the preceding claims, **characterized in that** the mass elements (325) are mounted on the rotor (323) and/or on an additional axle (423) and connected to the rotor (323) through gear elements (429).

5. Electromechanical power actuator (120) according to one of the preceding claims, **characterized in that** a connection of the mass elements (325) and the coupling (327) is provided by pivoted levers (830) and/or by a flexible cord or chain element (930).

6. Electromechanical power actuator (120) according to one of the preceding claims, **characterized in that** the primary electromagnetic coil (322) and the rotor (323; 423) are spaced from each other radially and/or axially with respect to the actuation axis (321).

7. Electromechanical power actuator (120) according to one of the preceding claims, **characterized in that** radial movement of the mass elements (325) away from the rotation axis of the rotor (323; 423) produces axial movement of the acting element (326) along the actuation axis (321) away from the rotor (323; 423) or toward the rotor (323; 423).

8. Electromechanical power actuator (120) according to one of the preceding claims, **characterized by** a wear compensating device (1140) for compensating wear of the friction generation device (115), wherein the wear compensating device (1140) is arranged between the rotor (323; 423) and the coupling (327) and/or between the coupling (327) and the acting element (326).

9. Electromechanical power actuator (120) according to one of the preceding claims, **characterized in that** the energy storage device (1350) comprises at least one electrostatic capacitor element and/or at least one electrochemical battery element.

10. Electromechanical power actuator (120) according to one of the preceding claims, **characterized in that** the flywheel (1450) is connected to the rotor (323; 423) by a mechanical coupling device (1660), wherein the mechanical coupling device (1660) is operated between a coupling state and a decoupling state depending on a control signal from an electronic control unit (328).

11. Electromechanical power actuator (120) according to one of the preceding claims, **characterized in that** the flywheel (1450) is an additional rotor magnetically connected to a secondary coil (1452) arranged in at least one winding around the actuation axis (321) or around an axis parallel or transversal thereto.

12. Friction generation system (110) for a motor vehicle (100), **characterized in that** the friction generation system (110) comprises:
an electromechanical power actuator (120) according to one of the preceding claims; and
a friction generation device (115), which is arranged to be actuated by the actuator (120) so as to cause friction.

13. Method (200) of actuating a friction generation device (115) for a motor vehicle (100), wherein the method (200) is executable using an electromechanical power actuator (120), the actuator (120) being configured to apply an actuation force along a linear actuation axis (321) to the friction generation device (115) and comprising an energy storage device (1350; 1450), wherein the energy storage device (1350; 1450) is integrated into the actuator (120), wherein the energy storage device comprises a rotatable flywheel (1450), **characterized in that** the method (200) comprises:
applying (210) an electrical signal to a primary electromagnetic coil (322) of the actuator (120) formed to be arranged in at least one winding around the actuation axis (321) or around an axis parallel or transversal thereto, so as to rotate a rotor (323; 423) magnetically connected to the primary electromagnetic coil (322), the rotor (323; 423) having a plurality of mass elements (325) rotatable with the rotor (323; 423) and radially movable with respect to a rotation axis of the rotor (323; 423) and in relation to rotation speed of the rotor (323; 423); and
transferring (220) kinetic energy from the mass elements (325) to an acting element (326) formed to be guided along the actuation axis (321) and coupled to the rotor (323; 423) by means of a coupling (327) formed to connect the acting element (326) to the mass elements (325), so as to move the acting element (326) along the actuation axis (321), wherein the acting element (326) is axially movable in relation to radial movement of the mass elements (325), wherein the coupling (327) comprises an axial bearing for inhibiting torque transfer from the rotor (323; 423) to the acting element (326).

## Patentansprüche

1. Elektromechanischer Leistungsaktuator (120), der zum Anlegen einer Betätigungskraft an eine Reibungserzeugungsvorrichtung (115) eines Kraftfahrzeugs (100) entlang einer linearen Betätigungsachse (321) ausgelegt ist, **dadurch gekennzeichnet, dass** der Aktuator (120) Folgendes umfasst:
eine elektromagnetische Primärspule (322), die zur Anordnung in mindestens einer Wicklung rund um die Betätigungsachse (321) oder rund um eine parallel oder quer zu dieser verlaufende Achse ausgelegt ist;
einen magnetisch mit der elektromagnetischen Primärspule (322) magnetisch verbundenen Rotor (323; 423), der eine Vielzahl von Masseelementen (325) aufweist, die mit dem Rotor (323; 423) drehbar sind und bezüglich einer Drehachse des Rotors (323; 423) und im Verhältnis zur Drehzahl des Rotors (323; 423) radial bewegbar sind;
ein zur Führung entlang der Betätigungsachse (321) ausgebildetes und an den Rotor (323; 423) gekoppeltes Wirkelement (326);
eine zur Verbindung des Wirkelements (326) mit den Masseelementen (325) ausgebildete Kopplung (327), wobei das Wirkelement (326) im Verhältnis zur Radialbewegung der Masseelemente (325) axial bewegbar ist, wobei die Kopplung (327) ein Axiallager zur Verhinderung der Drehmomentübertragung vom Rotor (323; 423) auf das Wirkelement (326) umfasst; und
eine Energiespeichervorrichtung (1350; 1450), **dadurch gekennzeichnet, dass** die Energiespeichervorrichtung (1350; 1450) in den Aktuator (120) integriert ist, und dass die Energiespeichervorrichtung ein drehbares Schwungrad (1450) umfasst.

2. Elektromechanischer Leistungsaktuator (120) nach Anspruch 1, **gekennzeichnet durch** eine mit der elektromagnetischen Primärspule (322) verbundene elektronische Steuereinheit (328).

3. Elektromechanischer Leistungsaktuator (120) nach Anspruch 2, **dadurch gekennzeichnet, dass** die elektronische Steuereinheit (328) in ein Gehäuse des Aktuators (120) integriert ist.

4. Elektromechanischer Leistungsaktuator (120) nach einem der vorhergehenden Ansprüche, **dadurch gekennzeichnet, dass** die Masseelemente (325) am Rotor (323) und/oder an einer zusätzlichen Achse (423) montiert und über Zahnradelemente (429) mit dem Rotor (323) verbunden sind.

5. Elektromechanischer Leistungsaktuator (120) nach einem der vorhergehenden Ansprüche, **dadurch gekennzeichnet, dass** eine Verbindung der Masseelemente (325) und der Kopplung (327) von Schwenkhebeln (830) und/oder von einem flexiblen Seil- oder Kettenelement (930) bereitgestellt wird.

6. Elektromechanischer Leistungsaktuator (120) nach einem der vorhergehenden Ansprüche, **dadurch gekennzeichnet, dass** die elektromagnetische Primärspule (322) und der Rotor (323; 423) mit Bezug auf die Betätigungsachse (321) radial und/oder axial voneinander beabstandet sind.

7. Elektromechanischer Leistungsaktuator (120) nach einem der vorhergehenden Ansprüche, **dadurch gekennzeichnet, dass** die Radialbewegung der Masseelemente (325) von der Drehachse des Rotors weg (323; 423) eine Axialbewegung des Wirkelements (326) entlang der Betätigungsachse (321) vom Rotor (323; 423) weg oder zum Rotor (323; 423) hin veranlasst.

8. Elektromechanischer Leistungsaktuator (120) nach einem der vorhergehenden Ansprüche, **gekennzeichnet durch** eine Verschleißausgleichvorrichtung (1140) zum Ausgleich des Verschleißes der Reibungserzeugungsvorrichtung (115), wobei die Verschleißausgleichvorrichtung (1140) zwischen dem Rotor (323; 423) und der Kopplung (327) und/oder zwischen der Kopplung (327) und dem Wirkelement (326) angeordnet ist.

9. Elektromechanischer Leistungsaktuator (120) nach einem der vorhergehenden Ansprüche, **dadurch gekennzeichnet, dass** die Energiespeichervorrichtung (1350) mindestens ein elektrostatisches Kondensatorelement und/oder mindestens ein elektrochemisches Batterieelement umfasst.

10. Elektromechanischer Leistungsaktuator (120) nach einem der vorhergehenden Ansprüche, **dadurch gekennzeichnet, dass** das Schwungrad (1450) durch eine mechanische Kopplungsvorrichtung (1660) mit dem Rotor (323; 423) verbunden ist, wobei die mechanische Kopplungsvorrichtung (1660) je nach einem Steuersignal von einer elektronischen Steuereinheit (328) zwischen einem Kopplungs- und einem Entkopplungszustand betätigt wird.

11. Elektromechanischer Leistungsaktuator (120) nach einem der vorhergehenden Ansprüche, **dadurch gekennzeichnet, dass** das Schwungrad (1450) ein zusätzlicher Rotor ist, der magnetisch mit einer Sekundärspule (1452) verbunden ist, die in mindestens einer Wicklung rund um die Betätigungsachse (321) oder rund um eine parallel oder quer zu dieser verlaufende Achse angeordnet ist.

12. Reibungserzeugungssystem (110) für ein Kraftfahrzeug (100), **dadurch gekennzeichnet, dass** das Reibungserzeugungssystem (110) Folgendes umfasst:
einen elektromechanischen Leistungsaktuator (120) nach einem der vorhergehenden Ansprüche; und
eine Reibungserzeugungsvorrichtung (115), die zwecks Reibungserzeugung zur Betätigung durch den Aktuator (120) ausgelegt ist.

13. Verfahren (200) zur Betätigung einer Reibungserzeugungsvorrichtung (115) für ein Kraftfahrzeug (100), wobei das Verfahren unter Anwendung eines elektromechanischen Leistungsaktuators (120) ausführbar ist, der zum Anlegen einer Betätigungskraft an die Reibungserzeugungsvorrichtung (115) eines Kraftfahrzeugs (100) entlang einer linearen Betätigungsachse (321) ausgelegt ist und eine Energiespeichervorrichtung (1350; 1450) umfasst, wobei die Energiespeichervorrichtung (1350; 1450) in den Aktuator (120) integriert ist, wobei die Energiespeichervorrichtung ein drehbares Schwungrad (1450) umfasst, **dadurch gekennzeichnet, dass** das Verfahren (200) Folgendes umfasst:
das Anlegen (210) eines elektrischen Signals an eine elektromagnetische Primärspule (322), die zur Anordnung in mindestens einer Wicklung rund um die Betätigungsachse (321) oder rund um eine parallel oder quer zu dieser verlaufende Achse ausgelegt ist, um einen magnetisch mit der elektromagnetischen Primärspule (322) verbundenen Rotor (323; 423) zu drehen, der eine Vielzahl von Masseelementen (325) aufweist, die mit dem Rotor (323; 423) drehbar sind und bezüglich einer Drehachse des Rotors (323; 423) und im Verhältnis zur Drehzahl des Rotors (323; 423) radial bewegbar sind; und
das Übertragen (220) von kinetischer Energie von den Masseelementen (325) auf ein Wirkelement (326), das zur Führung entlang einer Betätigungsachse (321) ausgelegt und mittels einer Kopplung (327) an den Rotor (323; 423) gekoppelt ist, die zur Verbindung des Wirkelements (326) mit den Masseelementen (325) ausgebildet ist, so dass das Wirkelement (326) entlang der Betätigungsachse (321) bewegt wird, wobei das Wirkelement (326) im Verhältnis zur Radialbewegung der Masseelemente (325) axial bewegbar ist, wobei die Kopplung (327) ein Axiallager zur Verhinderung der Drehmomentübertragung vom Rotor (323; 423) auf das Wirkelement (326) umfasst.

## Revendications

1. Actionneur (120) électromécanique, l'actionneur (120) étant configuré pour appliquer une force d'actionnement suivant un axe (321) d'actionnement linéaire à un dispositif (115) de production de frottement d'un véhicule (100) à moteur, **caractérisé en ce que** l'actionneur (120) comprend une bobine (322) électromagnétique primaire, conformée pour être agencée, en au moins un enroulement, autour de l'axe (321) d'actionnement ou autour d'un axe, qui lui est parallèle ou transversal ;
un rotor (323 ; 423), relié magnétiquement à la bobine (322) électromagnétique primaire, le rotor (323 ; 423) ayant une pluralité d'éléments (325) de masse pouvant tourner avec le rotor et mobiles radialement par rapport à un axe de rotation du rotor (323 ; 423) et en relation avec la vitesse de rotation du rotor (323 ; 423) ;
un élément (326) d'actionnement, conformé pour être guidé suivant l'axe (321) d'actionnement et couplé au rotor (323 ; 423) ;
un couplage (327), conformé pour relier l'élément (326) d'actionnement aux éléments (325) de masse, l'élément (326) d'actionnement étant mobile axialement par rapport à un déplacement radial des éléments (325) de masse, le couplage (327) comprenant un palier axial pour empêcher un transfert de couple du rotor (323 ; 423) à l'élément (326) d'actionnement, et
un dispositif (1350 ; 1450) d'accumulation d'énergie, **caractérisé en ce que** le dispositif (1350 ; 1450) d'accumulation d'énergie est intégré à l'actionneur (120) et **en ce que** le dispositif d'accumulation d'énergie comprend une roue libre (1450) tournante.

2. Actionneur (120) électromécanique suivant la revendication 1, **caractérisé par** une unité (328) électronique de commande connectée à la bobine (322) électromagnétique primaire.

3. Actionneur (120) électromécanique suivant la revendication 2, **caractérisé en ce que** l'unité (328) électronique de commande est intégrée à un boîtier de l'actionneur (120).

4. Actionneur (120) électromécanique suivant l'une des revendications précédentes, **caractérisé en ce que** les éléments (325) de masse sont montés sur le rotor (323) et/ou sur un essieu (423) supplémentaire et relié au rotor (323) par des éléments (429) d'engrenage.

5. Actionneur (120) électromécanique suivant l'une des revendications précédentes, **caractérisé en ce qu'**une liaison des éléments (325) de masse et du couplage (327) est prévue par des leviers (830) pivotants et/ou par un cordon souple ou par un élément (930) de chaîne.

6. Actionneur (120) électromécanique suivant l'une des revendications précédentes, **caractérisé en ce que** la bobine (322) électromagnétique primaire et le rotor (323 ; 423) sont à distance l'un de l'autre radialement et/ou axialement par rapport à l'axe (321) d'actionnement.

7. Actionneur (120) électromécanique suivant l'une des revendications précédentes, **caractérisé en ce qu'**un éloignement radial des éléments (325) de masse de l'axe de rotation du rotor (323 ; 423) produit un déplacement axial de l'élément (326) d'actionnement suivant l'axe (321) d'actionnement, l'éloignant du rotor (323 ; 423) ou le rapprochant du rotor (323 ; 423).

8. Actionneur (120) électromécanique suivant l'une des revendications précédentes, **caractérisé par** un dispositif (1140) de compensation de l'usure pour compenser de l'usure du dispositif (115) produisant le frottement, le dispositif (1140) de compensation de l'usure étant disposé entre le rotor (323 ; 423) et le couplage (327) et/ou entre le couplage (327) et l'élément (326) d'actionnement.

9. Actionneur (120) électromécanique suivant l'une des revendications précédentes, **caractérisé en ce que** le dispositif (1350) d'accumulation d'énergie comprend au moins un élément de condensateur électrostatique et/ou au moins un élément de batterie électrochimique.

10. Actionneur (120) électromécanique suivant l'une des revendications précédentes, **caractérisé en ce que** la roue libre (1450) est reliée au rotor (323 ; 423) par un dispositif (1660) de couplage mécanique, le dispositif (1660) de couplage mécanique fonctionnant entre un état de couplage et un état de découplage en fonction d'un signal de commande d'une unité (328) électronique de commande.

11. Actionneur (120) électromécanique suivant l'une des revendications précédentes, **caractérisé en ce que** la roue libre (1450) est un moteur supplémentaire relié magnétiquement à une bobine (1452) secondaire agencée suivant au moins un enroulement autour de l'axe (321) d'actionnement ou autour d'un axe, qui lui est parallèle ou transversal.

12. Système (110) de production de frottement d'un véhicule (100) à moteur, **caractérisé en ce que** le système (110) de production de frottement comprend :
un actionneur (120) électromécanique suivant l'une des revendications précédentes ; et
un dispositif (115) produisant du frottement, qui est disposé de manière à être actionné par l'actionneur (120), de manière à provoquer du frottement.

13. Procédé (200) d'actionnement d'un dispositif (115) de production de frottement d'un véhicule (100) à moteur, le procédé (200) pouvant être exécuté en utilisant un actionneur (120) électromécanique, l'actionneur (120) étant configuré pour appliquer une force d'actionnement suivant un axe (321) d'actionnement linéaire à un dispositif (115) de production de frottement et comprenant un dispositif (1350 ; 1450) d'accumulation d'énergie, le dispositif (1350 ; 1450) d'accumulation d'énergie étant intégré à l'actionneur (120), le dispositif d'accumulation d'énergie comprenant une roue libre (1450) tournante, **caractérisé en ce que** le procédé (200) comprend :
appliquer (210) un signal électrique à une bobine (322) électromagnétique primaire de l'actionneur (120), conformé pour être disposé suivant un enroulement autour de l'axe (321) d'actionnement ou autour d'une axe, qui lui est parallèle ou transversal, de manière à faire tourner un rotor (323 ; 423) relié magnétiquement à la bobine (322) électromagnétique primaire, le rotor (323 ; 423) ayant une pluralité d'éléments (325) de masse tournant avec le rotor (323 ; 423) et mobiles radialement par rapport à l'axe de rotation du rotor (323 ; 423) et en relation avec la vitesse de rotation du rotor (323 ; 423) ; et
transférer (220) de l'énergie cinétique des éléments (325) de masse à un élément (326) d'actionnement conformé pour être guidé suivant l'axe (321) d'actionnement et couplé au rotor (323 ; 423) au moyen d'un couplage (327) conformé pour relier l'élément (326) d'actionnement aux éléments (325) de masse, de manière à déplacer l'élément (326) d'actionnement suivant l'axe (321) d'actionnement, l'élément (326) d'actionnement étant mobile axialement en relation au mouvement radial des éléments (325) de masse, le couplage (327) comprenant un palier axial pour empêcher un transfert de couple du rotor (323 ; 423) à l'élément (326) d'actionnement.
